# EUROPÄISCHE PATENTSCHRIFT

(11) **EP 3 606 375 B1**
(45) Veröffentlichungstag und Bekanntmachung des Hinweises auf die Patenterteilung: **29.03.2023**
(21) Anmeldenummer: 18714519.8
(22) Anmeldetag: 29.03.2018
(51) Int. Cl.: A45C 15/00, A45C 5/03, A45C 5/14, A45C 13/28

(54) **KOFFER MIT AUFNAHMEFACH UND MIT WIEDERAUFLADBARER BATTERIE**
SUITCASE HAVING A RECEIVING COMPARTMENT AND A RECHARGEABLE BATTERY
VALISE AVEC COMPARTIMENT DE RÉCEPTION ET BATTERIE RECHARGEABLE

(30) Priorität: 03.04.2017 DE 202017101957 U
(43) Veröffentlichungstag der Anmeldung: 12.02.2020
(73) Patentinhaber: HS New Travel GmbH, 10785 Berlin (DE)
(72) Erfinder: ROOSEN, Jan Hendrik, 10967 Berlin (DE)
(74) Vertreter: Bardehle Pagenberg Partnerschaft mbB Patentanwälte Rechtsanwälte
(86) Internationale Anmeldenummer: PCT/EP2018/058241
(87) Internationale Veröffentlichungsnummer: WO 2018/185016

(56) Entgegenhaltungen:
- CN-U- 204 336 080
- CN-U- 205 053 105
- US-A1- 2012 152 677
- US-A1- 2015 101 958
- UNBOXING Fashion & Sports: "Horizn Studios Cabin Trolley "All Black" | A FIRST LOOK | UNBOXING | smart luggage | 2017 | HD", , 2 January 2017 (2017-01-02), Retrieved from the Internet: URL:https://www.youtube.com/watch?v=zc-fyx u2VQ0 [retrieved on 2020-09-09]
- Holidays & more: "Unboxing of Horizn Studio Model M Cabin Trolley | Holidays & More", , 19 February 2017 (2017-02-19), Retrieved from the Internet: URL:https://www.youtube.com/watch?v=f1ch_4 I_hM8 [retrieved on 2020-09-09]

## Beschreibung

Die Erfindung betrifft einen Hartschalenkoffer gemäß Anspruch 1.

Die Erfindung betrifft weiterhin eine Montageeinheit gemäß Anspruch 14.

Es sind Koffer mit Batterien bekannt, an denen elektrische Geräte wie ein Mobiltelefon angeschlossen werden können, um diese elektrisch aufzuladen. Die Batterie und der Koffer können unterschiedliche Lebensdauern haben bzw. die Leistungsfähigkeit der Batterie lässt nach häufigem Gebrauch nach. Zudem besteht insbesondere bei Lithium basierten Batterien eine Entzündungsgefahr, so dass bei Koffern mit derartigen Batterien die Batterie vor Aufgabe des Koffers zum Transport in einem Gepäckraum eines Flugzeugs aus dem Koffer entfernt werden muss. Bei bekannten Koffern ist es üblich, die Batterie vom Inneren des Koffers austauschbar zu montieren. Es ist somit bei bekannten Koffern mit Batterien aufwändig die Batterie auszutauschen, insbesondere wenn der Koffer bereits mit Kleidungsstücken oder Ähnlichem gefüllt ist.

Die Druckschrift US 2012/0152677 A1 offenbart einen Reisekoffer mit einer Energievorrichtung, welche während des Rollens der Räder Energie erzeugen kann, die in einer Batterie in dem Reisekoffer gespeichert werden kann.

Die Druckschrift CN 205 053 105 U offenbart einen Reisekoffer mit einer drahtlosen Kommunikationsvorrichtung.

Die Druckschrift US 2015/0101958 A1 offenbart eine Steckervorrichtung mit einem Rahmen, der in eine Tasche eingebaut werden kann und eine Innenseite sowie eine Außenseite definiert, sowie einem ersten Satz an elektrischen Steckern, die drehbar an dem Rahmen angebracht sind und im Verhältnis zu dem Rahmen zwischen einer auf der Außenseite freiliegenden Position und einer auf der Innenseite freiliegenden Position gedreht werden können.

Die Druckschrift CN 204 336 080 U offenbart einen Trolley-Koffer mit einer Aufbewahrungsbox und einer mobilen Energiequelle, wobei die Ladebuchse und Energieversorgungsbuchse der mobilen Energiequelle mit der Aufbewahrungsbox in Verbindung stehen.

Ausgehend von einem Hartschalenkoffer der eingangs genannten Art besteht die Aufgabe darin, einen Hartschalenkoffer mit einer Batterie zur Verfügung zu stellen, bei dem die Batterie leichter austauschbar ist.

Die Aufgabe wird dadurch gelöst, dass die erste Hartschale eine außenliegende Öffnung aufweist, über welche die Batterie in einer Einführrichtung in das Aufnahmefach einführbar ist, wobei das Aufnahmefach ein Haltemittel aufweist, welches in einer Schließstellung die Batterie in dem Aufnahmefach lösbar formschlüssig hält.

Die Aufgabe wird zudem dadurch gelöst, dass das Montagegerüst eine außenliegende Öffnung aufweist, über welche die Batterie in einer Einführrichtung in das Aufnahmefach einführbar ist, wobei das Aufnahmefach ein Haltemittel aufweist, welches in einer Schließstellung die Batterie in dem Aufnahmefach lösbar formschlüssig hält.

Der erfindungsgemäße Hartschalenkoffer und die erfindungsgemäße Montageeinheit ermöglichen eine leichtere Handhabung der Batterie. Die Batterie kann bei Bedarf ohne großen Aufwand entnommen werden. Das Auswechseln der Batterie ist ebenfalls weniger aufwändig.

Die Montageeinheit hat den Vorteil, dass bestehende Koffermodelle nicht neu konzipiert werden müssen, um ein erfindungsgemäßes Aufnahmefach aufnehmen zu können.

Gemäß der beanspruchten Erfindung weist das Aufnahmefach im Inneren eine Stützplatte zur Auflage der Batterie auf, wobei die Stützplatte über mindestens ein Rückstellmittel mit einer Rückstellkraft beaufschlagt ist, wobei die Rückstellkraft entgegen der Einführrichtung gerichtet ist. Die Stützplatte drückt gegen die Batterie in Richtung der Öffnung. Insbesondere wirken die Stützplatte und das Haltemittel zusammen haltend auf die Batterie und halten diese in dem Aufnahmefach fest. Das Rückstellmittel ist insbesondere derart ausgestaltet, dass die Stützplatte die Batterie gegen Erschütterungen dämpft.

Bevorzugt ist vorgesehen, dass die Stützplatte zwei Führungsmittel zur Führung der Stützplatte längs der Einführrichtung in dem Aufnahmefach und gegen ein Verkanten der Stützplatte in dem Aufnahmefach aufweist. Dies begünstigt, dass die Stützplatte leichtgängig verschiebbar ist.

Erfindungsgemäß ist das Rückstellmittel an einer der Öffnung der ersten Hartschale gegenüberliegenden Stirnseite des Aufnahmefachs angeordnet und bildet einen Anschlag für die Stützplatte in dem Aufnahmefach. Dies erhöht die Langlebigkeit der Führungsmittel und der Stützplatte.

Insbesondere ist das Haltemittel mit einer Haltekraft beaufschlagt, die quer, besonders bevorzugt senkrecht, zur Einführrichtung und in Richtung der Schließstellung gerichtet ist. Das Haltemittel geht somit selbsttätig in die Schließstellung über in welcher sie die Batterie in dem Aufnahmefach hält. Die Haltekraft des Haltemittels wirkt nicht entgegen der Rückstellkraft des Rückstellmittels der Stützplatte sondern quer bzw. senkrecht zu dieser. Somit hält das Haltemittel die Batterie in dem Schließfach und nicht das Mittel, das das Haltemittel mit einer Haltekraft beaufschlagt.

Bevorzugt ist das Aufnahmefach als ein zu den Hartschalen separates Teil ausgestaltet, wobei das Aufnahmefach mit der ersten Hartschale verbunden und vollständig in der ersten Hartschale aufgenommen ist. Dies erleichtert die Montage des Aufnahmefachs im Hartschalenkoffer.

Vorzugsweise ist das Aufnahmefach als ein mehrteiliges Gehäuse ausgebildet. Dies vereinfacht die Montage der Stützplatte und des Rückstellmittels.

Insbesondere ist vorgesehen, dass das Haltemittel in dem Aufnahmefach zumindest teilweise aufgenommen und mit dem Aufnahmefach verbunden ist. Die Haltekraft auf die Batterie wird folglich bevorzugt von dem Haltemittel und dem Aufnahmefach aufgebracht.

Insbesondere weist das Aufnahmefach an der Öffnung der ersten Hartschale einen die Öffnung umfangsgemäß umschließenden Flansch zur Montage des Aufnahmefachs an der ersten Hartschale auf. Der Flansch überträgt die Kraft, mit der das Aufnahmefach beim Einschieben der Batterie beaufschlagt wird, großflächig auf die Hartschale. Dies erhöht die Langlebigkeit des Hartschalenkoffers.

Bevorzugt liegt das Haltemittel auf dem Flansch von der Schließstellung bis zu einer Öffnungsstellung und umgekehrt verschiebbar auf, wobei das Haltemittel in der Schließstellung mit dem Flansch formschlüssig verbunden ist. Der Flansch ist leicht zugänglich, so dass das Haltemittel einfacher montierbar ist. Die formschlüssige Verbindbarkeit verbessert insbesondere die Handhabung des filigran ausgestalteten Haltemittels bei der Montage.

Vorzugsweise nimmt der Flansch das Haltemittel in der Schließstellung vollständig auf. Das Haltemittel ist folglich gut geschützt.

Insbesondere weist das Haltemittel eine spitzwinklig zur Einführrichtung verlaufende Einführschräge auf. Das Haltemittel wird hierdurch vereinfacht durch das Aufdrücken der Batterie auf die Schräge des Haltemittels zurückgeschoben.

Besonders bevorzugt ist ein Neigungswinkel der Einführschräge des Haltemittels proportional zur Haltekraft. Dies erleichtert das Betätigen des Haltemittels.

Vorzugsweise weist die erste Hartschale einen aus der Hartschale herausziehbaren U-förmigen Haltebügel zum Hinterherziehen des Hartschalenkoffers auf, wobei der Haltebügel zwei stangenförmige Schenkel aufweist, die in zwei parallel zueinander verlaufende Aufnahmeröhren der ersten Hartschale vollständig aufnehmbar sind, wobei das Aufnahmefach zwischen den beiden Aufnahmeröhren angeordnet ist. Der Hartschalenkoffer ist in dem Bereich des Haltebügels verstärkt, da er in diesem Bereich erhöhten Kräften ausgesetzt ist. Weiterhin weist der Hartschalenkoffer in diesem Bereich ohnehin eine Ausnehmung zur Aufnahme des Haltebügels auf, so dass er mit keinen weiteren materialschwächenden Bereichen versehen werden muss, um das Aufnahmefach montieren zu können. Besonders bevorzugt ist die Öffnung der ersten Hartschale zwischen Einführöffnungen der Aufnahmeröhren angeordnet, wobei die Einführrichtung der Batterie einer Einschieberichtung der Schenkel des U-förmigen Haltebügels in die Aufnahmeröhren entspricht.

Insbesondere ist vorgesehen, dass das Aufnahmefach an der Öffnung der ersten Hartschale eine verschwenkbare Klappe zum Verschluss des Aufnahmefachs aufweist, wobei die Klappe in einem verschlossenen Zustand des Aufnahmefachs lösbar mit der ersten Hartschale verrastet ist. Im verschlossenen Zustand des Aufnahmefachs ist die Batterie vor Schmutz, Witterung und Beschädigung geschützt.

Vorzugsweise deckt die Klappe in dem verschlossenen Zustand des Aufnahmefachs das Haltemittel ab. Das Haltemittel ist somit im verschlossenen Zustand des Aufnahmefachs vor Schmutz, Witterung und Beschädigung geschützt.

Bevorzugt ist vorgesehen, dass die Klappe in dem verschlossenen Zustand des Aufnahmefachs über ein Schlüsselschloss verschließbar ist. Alternativ ist die Klappe in dem verschlossenen Zustand des Aufnahmefachs über ein Transportation Security Administration-Schloss (TSA-Schloss) verschließbar. Die Batterie ist somit vor Diebstahl geschützt.

Insbesondere weist die Klappe eine Durchführöffnung zum Durchführen eines Steckers eines Ladekabels auf. Somit kann die Batterie auch im verschlossenen Zustand des Aufnahmefachs geladen werden.

Weitere vorteilhafte Ausgestaltungen der Erfindung ergeben sich aus der folgenden Figurenbeschreibung und den abhängigen Unteransprüchen.

Es zeigen:
- Fig. 1: Eine Ansicht eines erfindungsgemäßen Hartschalenkoffers,
- Fig. 2a: ein erfindungsgemäßes Aufnahmefach mit einer vollständig aufgenommenen Batterie und einem Haltemittel in der Schließstellung und
- Fig. 2b: ein erfindungsgemäßes Aufnahmefach mit einer teilweise aufgenommenen Batterie und einem Haltemittel in der Öffnungsstellung.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

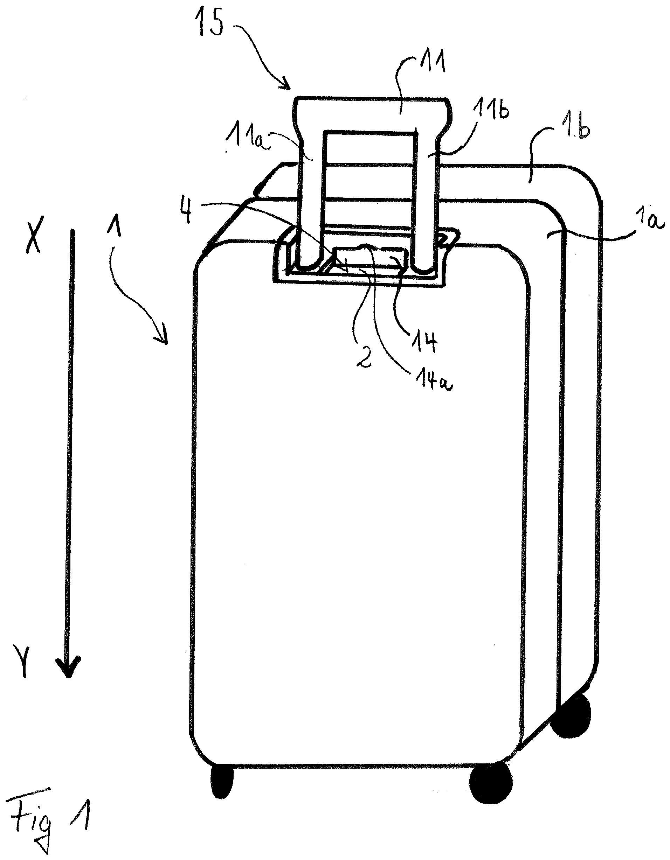

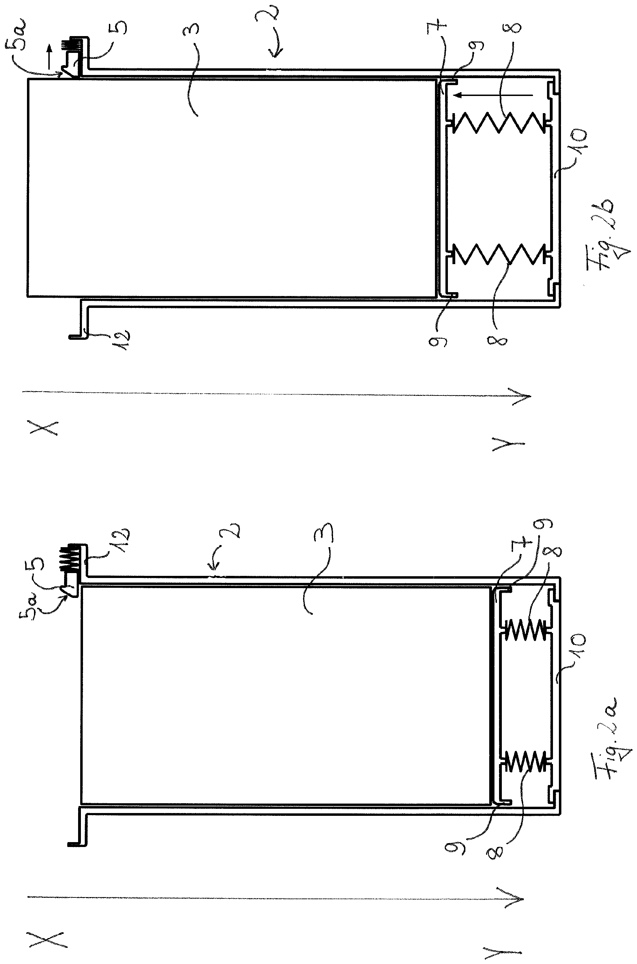

In Fig. 1 ist ein erfindungsgemäßer Hartschalenkoffer 1 schematisch mit einem erfindungsgemäßen Aufnahmefach 2 dargestellt. Der Koffer 1 weist zwei Hartschalen 1a, 1b auf. Eine erste Hartschale 1a des Koffers 1 weist das Aufnahmefach 2 auf. In dem Aufnahmefach 2 ist eine in Fig. 1 nicht dargestellte Batterie 3 aufgenommen, wobei die Batterie 3 in den Figuren 2a und 2b dargestellt ist. Die erste Hartschale 1a weist eine Öffnung 4 auf, über die die Batterie 3 in das Aufnahmefach 2 in einer Einführrichtung X-Y einführbar ist.

In Fig. 2a ist ein Querschnitt durch das Aufnahmefach 2 längs der Einführrichtung X-Y dargestellt. In der Darstellung der Fig. 2a ist die Batterie 3 vollständig in dem Aufnahmefach 2 aufgenommen und ist über ein Haltemittel 5 lösbar formschlüssig gehalten, wobei sich das Haltemittel 5 in einer Schließstellung befindet.

Die Batterie 3 ist wiederaufladbar und derart ausgestaltet, dass sie zum Aufladen eines externen elektrischen Gerätes, wie z. B. einem Mobiltelefon, geeignet ist. Geeignete Batterien haben beispielsweise eine Kapazität von 10.000 mAh und einen oder mehrere geeignete Anschlüsse zum Anschließen von Ladekabeln, wie z.B. ein USB- oder Mini-USB-Kabel und/oder einen Anschluss zum Aufladen der Batterie.

Die Batterie 3 ist aus dem Aufnahmefach 2 herausnehmbar, indem das Haltemittel 5 von der Schließstellung in eine Öffnungsstellung überführt wird. In Fig. 2a ist das Haltemittel 5 in der Öffnungsstellung dargestellt. Das Haltemittel 5 gibt in der Öffnungsstellung die Batterie 3 frei, so dass diese aus dem Aufnahmefach 2 herausgenommen werden kann.

Um das Herausnehmen der Batterie 3 zu vereinfachen, ist die Batterie 3 durch das Aufnahmefach 2 vorzugsweise mit einer Rückstellkraft in eine zur Einführrichtung X-Y entgegengesetzte Richtung beaufschlagt. Insbesondere weist das Aufnahmefach 2 zu diesem Zweck im Inneren eine Stützplatte 7 auf. Die Stützplatte 7 ist insbesondere über mindestens ein Rückstellmittel 8 mit einer Rückstellkraft beaufschlagt, die entgegen der Einführrichtung X-Y gerichtet ist. Das Rückstellmittel 8 ist vorzugsweise an einer der Öffnung 4 in Einführrichtung X-Y gegenüberliegenden, im Aufnahmefach 2 innenliegenden Stirnseite 10 des Aufnahmefachs 2 angeordnet. Insbesondere ist das Rückstellmittel 8 sowohl an der Stützplatte 7 als auch an dem Aufnahmefach 2, insbesondere an der Stirnseite 10, befestigt. Dies hat den Vorteil, dass die Stützplatte 7 in dem Aufnahmefach 2 unverlierbar gehalten ist. Das Rückstellmittel 8 ist beispielsweise eine Spiralfeder. Das Rückstellmittel 8 kann Erschütterungen dämpfen, welchen der Koffer 1 bei der Benutzung ausgesetzt ist.

Besonders bevorzugt sind zwei Rückstellmittel 8 vorgesehen, welche beidseitig zu einer längs der Einführrichtung X-Y verlaufenden mittleren Längsachse des Aufnahmefachs 2 angeordnet sind. Dies begünstigt eine gleichmäße Beaufschlagung der Rückstellmittel 8 mit einer Rückstellkraft. Gleichzeitig wird die Möglichkeit eines Verkantens der Stützplatte 7 in dem Aufnahmefach 2 reduziert.

Die Stützplatte 7 und das Aufnahmefach 2 sind derart in Anpassung aneinander ausgestaltet, dass die Stützplatte 7 in dem Aufnahmefach 2 entlang der Einführrichtung X-Y verschiebbar geführt ist. Vorzugsweise ist die Stützplatte 7 von Wänden des Aufnahmefachs 2 umschlossen, wobei die Stützplatte 7 insbesondere an den Wänden des Aufnahmefachs 2 verschiebbar anliegt.

Insbesondere besitzt die Stützplatte 7 zwei Führungsmittel 9 zur Führung der Stützplatte 7 längs der Einführrichtung X-Y in dem Aufnahmefach 2 und gegen ein Verkanten der Stützplatte 7 in dem Aufnahmefach 2. Die Führungsmittel 9 können beispielsweise als zwei Stege ausgebildet sein, welche sich von der Stützplatte 7 in Einführrichtung X-Y wegerstrecken.

Vorzugsweise bildet das Rückstellmittel 8 einen Anschlag für die Stützplatte 7. Das bedeutet auch, dass die Führungsmittel 9 längs der Einführrichtung X-X kürzer ausgebildet sind als das Rückstellmittel 8. Wenn die Batterie 3 dann vollständig in dem Aufnahmefach 2 aufgenommen ist, begrenzt das Rückstellmittel 8 einen Verschiebeweg der Batterie 3 längs der Einführrichtung X-Y, so dass die Führungsmittel 9 nicht an der Stirnseite 10 des Aufnahmefachs 2 aufschlagen können. Ein Aufschlagen der Führungsmittel 9 würde die Stützplatte 7 und die Führungsmittel 9 mechanisch belasten.

Das Aufnahmefach 2 weist in einer bevorzugten Ausführungsform, z. B. an seiner Stirnseite 10, ein Fixiermittel auf. Das Fixiermittel ist derart ausgestaltet, dass es die Stützplatte 7 an der Stirnseite 10 des Aufnahmefachs 2 lösbar fixiert, wenn die Batterie 3 vollständig in dem Aufnahmefach 2 aufgenommen ist. Vorzugsweise ist das Fixiermittel derart ausgestaltet, dass die Fixierung gelöst wird, wenn die Batterie 3 ein weiteres Mal gegen die Stützplatte 7 gedrückt wird. Beispielsweise weist das Fixiermittel eine Öse oder einen Haken auf, welche sich von der Stützplatte 7 in Richtung der Stirnseite 10 des Aufnahmefachs 2 erstrecken, sowie einen Schließmechanismus, welcher sich von der Stirnseite 10 des Aufnahmefachs 2 in Richtung der Stützplatte 7 erstreckt und die Öse oder den Haken lösbar fixiert.

Insbesondere ist das Haltemittel 5 mit einer Haltekraft beaufschlagt, die quer zur Einführrichtung X-Y und in Richtung der Schließstellung gerichtet ist. Insbesondere ist die Haltekraft senkrecht zur Einführrichtung X-Y in Richtung der Schließstellung gerichtet. Die Haltekraft kann beispielsweise durch eine dem Haltemittel 5 zugeordnete Spiralfeder erzeugt sein, welche zwischen dem Aufnahmefach 2 und dem Haltemittel 5 angeordnet ist, siehe Figuren 2a und 2b.

Das Haltemittel 5 kann als eine Lasche ausgebildet sein. Das Haltemittel 5 kann die Batterie 3 in der Schließstellung halten, indem das Haltemittel 5 die Batterie 3 in der Schließstellung übergreift, siehe Fig. 2a. In diesem Fall wirkt das Haltemittel 5 mit der Stützplatte 7 zusammen, denn die Stützplatte 7, welche mit der Rückstellkraft entgegen der Einführrichtung X-Y beaufschlagt ist, drückt die Batterie 3 in Richtung des Haltemittels 5, so dass die Batterie 3 fest in dem Aufnahmefach 2 gehalten ist.

Das Aufnahmefach 2 kann als ein zu den Hartschalen 1a, 1b separates Teil ausgestaltet sein. Das Aufnahmefach 2 ist vorzugsweise mit der ersten Hartschale 1a verbunden und vollständig in der ersten Hartschale 1a aufgenommen. Dies hat den Vorteil, dass das Aufnahmefach 2 als ein Zusatzteil nachgerüstet werden kann. Beispielsweise kann die erste Hartschale 1a zum Einbauen des Aufnahmefachs 2 eine Ausnehmung aufweisen, in welche das Aufnahmefach 2 aufgenommen werden kann.

Zum Beispiel kann das Aufnahmefach 2 im Bereich von nicht dargestellten Aufnahmeröhren zum teilweisen Aufnehmen von Haltebügeln 11 zum Hinterherziehen des Koffers 1 angeordnet sein. Bei einem Koffer 1 mit einem U-förmigen Haltebügel 11 mit zwei stangenförmige Schenkeln 11a, 11b, die in zwei parallel zueinander verlaufende Aufnahmeröhren der ersten Hartschale 1a vollständig aufnehmbar sind, kann das Aufnahmefach 2 z. B. zwischen den beiden Aufnahmeröhren angeordnet sein, siehe Fig. 1.

Insbesondere ist die Öffnung 4 der ersten Hartschale 1a zwischen Einführöffnungen der Aufnahmeröhren angeordnet, wobei die Einführrichtung X-Y der Batterie 3 einer Einschieberichtung der Schenkel 11a, 11b des U-förmigen Haltebügels 11 in die Aufnahmeröhren entspricht. Ein mögliches Ausführungsbeispiel hierzu ist in Fig. 1 dargestellt.

Das Aufnahmefach 2 kann als mehrteiliges Gehäuse ausgebildet sein. Das Aufnahmefach 2 gemäß dem Ausführungsbeispiel der Figuren 2a und 2b ist dreiteilig. Bevorzugt ist eine an der Stirnseite 10 angeordnete Platte des Aufnahmefachs 2 als ein separates Teil des Gehäuses ausgebildet. Dies hat den Vorteil, dass das Rückstellmittel 8 vereinfacht an dem Aufnahmefach 2 befestigt werden kann. Die stirnseitig angeordnete Platte kann nach der Montage des Rückstellmittels 8 an der Platte mit dem/den anderen Gehäuseteil(en) des Aufnahmefachs 2 verbunden werden. Vorzugsweise sind die Platte und das/die anderen Gehäuseteil(e) des Aufnahmefachs 2 in Anpassung aneinander derart ausgestaltet, dass die Platte formschlüssig mit dem/den Gehäuseteil(en) verbindbar ist.

Das Haltemittel 5 ist insbesondere in dem Aufnahmefach 2 zumindest teilweise aufgenommen und mit dem Aufnahmefach 2 verbunden. Somit ist das Haltemittel 5 vor mechanischer Beschädigung geschützt. Bei dem Haltemittel 5 ist insbesondere zumindest teilweise ein Betätigungsabschnitt von dem Aufnahmefach 2 nicht umgeben und somit frei zugänglich für eine manuelle Betätigung.

Bevorzugt besitzt das Aufnahmefach 2 an der Öffnung 4 der ersten Hartschale 1a einen die Öffnung 4 umfangsgemäß umschließenden Flansch 12 zur Montage des Aufnahmefachs an der ersten Hartschale 1a. Über den Flansch 12 kann das Aufnahmefach 2 beispielsweise mit der ersten Hartschale 1a verschraubt werden.

Das Haltemittel 5 kann auf dem Flansch 12 von der Schließstellung bis zu der Öffnungsstellung und umgekehrt verschiebbar aufliegen. Das Haltemittel 5 ist insbesondere in der Schließstellung mit dem Flansch 12 formschlüssig verbunden. Beispielsweise kann das Haltemittel 5 eine Abstufung aufweisen, die bezüglich einer zwischen der Öffnungsstellung und der Schließstellung verlaufenden Verschiebeachse X-Z quer verläuft und welche in der Schließstellung an einer Anlageschulter des Aufnahmefachs 2 anliegt. Bevorzugt ist das Haltemittel 5 mit seiner Abstufung über die Haltekraft in der Schließstellung gegen die Anlageschulter gedrückt. Eine formschlüssige Verbindung des Haltemittels 5 mit dem Aufnahmefach 2 erleichtert die Montage des Aufnahmefachs 2, da die korrekte Einbaulage des filigranen Haltemittels leichter kontrolliert werden kann.

Der Flansch 12 nimmt insbesondere das Haltemittel 5 in der Schließstellung vollständig auf. Besonders bevorzugt ist das Aufnahmefach 2 mit der ersten Hartschale 1a derart verbunden und die Hartschale 1a und das Aufnahmefach 2 derart ausgestaltet, dass das Haltemittel 5 von einem Gehäuse der ersten Hartschale 1a in der Schließstellung verdeckt ist.

Insbesondere weist das Haltemittel 5 eine spitzwinklig zur Einführrichtung X-Y verlaufende Einführschräge 5a auf. Die Einführschräge 5a begünstigt das Zurückschieben des Haltemittels 5 in die Öffnungsstellung wenn die Batterie 3 auf die Einführschräge 5a gedrückt wird. Die Einführschräge 5a weist vorzugsweise einen Neigungswinkel bezüglich der Einführrichtung X-Y auf, welcher proportional zur Haltekraft des Haltemittels 5 ist.

Das Aufnahmefach 2 ist bevorzugt über eine verschwenkbare Klappe 14 verschließbar. Die verschwenkbare Klappe 14 ist insbesondere an der Öffnung 4 der ersten Hartschale 1a angeordnet und kann beispielsweise über ein Filmscharnier mit der ersten Hartschale 1a verschwenkbar verbunden sein. Insbesondere ist die Klappe 14 in einem verschlossenen Zustand des Aufnahmefachs 2 lösbar mit der ersten Hartschale 1a verrastet. Zusätzlich oder alternativ kann die Klappe 14 über einen von außen bewegbaren, manuell betätigbaren Flansch 12 geöffnet oder verschlossen werden.

Bevorzugt verdeckt die Klappe 14 in einem verschlossenen Zustand des Aufnahmefachs 2 das Haltemittel 5, auch wenn dieses sich in einer Schließstellung befindet. Die Klappe 14 kann eine bezüglich der Öffnung 4 konvexe Ausstülpung 14a aufweisen, welche das Öffnen der Klappe 14 erleichtert. Im Bereich der Ausstülpung 14a kann die erste Hartschale 1a eine entsprechende konkave Einkerbung aufweisen.

Bevorzugt ist die Klappe 14 in dem verschlossenen Zustand des Aufnahmefachs 2 über ein nicht dargestelltes Schlüsselschloss verschließbar. Alternativ ist die Klappe 14 über ein Transportation Security Administration-Schloss (TSA-Schloss) verschließbar.

Die Klappe 14 kann eine nicht dargestellte Durchführöffnung zum Durchführen eines Steckers eines Ladekabels aufweisen. Diese Durchführöffnung kann verschließbar sein, z.B. über eine Verschlussklappe.

Weiterhin ist erfindungsgemäß eine Montageeinheit 15 zur Montage an einer Ausnehmung einer ersten Hartschale 1a eines Hartschalenkoffers 1 vorgesehen. Die Montageeinheit 15 weist ein Montagegerüst auf, welches mit zwei parallel zueinander verlaufenden Aufnahmeröhren verbunden ist (nicht dargestellt). In den Aufnahmeröhren sind stangenförmige Schenkel eines U-förmigen Haltebügels 11 verschiebbar geführt. Das Montagegerüst weist das Aufnahmefach 2 auf, welches zwischen den Aufnahmeröhren angeordnet ist. Die erfindungsgemäße Montageeinheit 15 erleichtert die Montage des Aufnahmefachs 2 an dem Hartschalenkoffer 1.

Insbesondere weist die Montageeinheit die außenliegende Öffnung 4 auf, über welche die Batterie 3 in das Aufnahmefach 2 einführbar ist.

### Bezugszeichenliste

- 1: Hartschalenkoffer
- 1a, 1b: Hartschalen
- 1a: erste Hartschale
- 2: Aufnahmefach
- 3: Batterie
- 4: Öffnung der ersten Hartschale
- 5: Haltemittel
- 5a: Einführschräge
- 7: Stützplatte
- 8: Rückstellmittel
- 9: Führungsmittel
- 10: Stirnseite des Gehäuses
- 11: U-förmiger Haltebügel
- 11a, 11b: Schenkel des U-förmigen Haltebügels
- 12: Flansch
- 14: Klappe
- 14a: Ausstülpung
- 15: Montageeinheit

- X-Y: Einführrichtung

## Patentansprüche

1. Hartschalenkoffer (1), aufweisend zwei Hartschalen (1a, 1b),
wobei eine erste Hartschale (1a) ein Aufnahmefach (2) aufweist, in dem eine wiederaufladbare Batterie (3) zum Aufladen eines externen elektrischen Gerätes aufgenommen ist,
wobei die erste Hartschale (1a) eine außenliegende Öffnung (4) aufweist, über welche die Batterie (3) in einer Einführrichtung (X-Y) in das Aufnahmefach (2) einführbar ist,
wobei das Aufnahmefach (2) ein Haltemittel (5) aufweist, welches in einer Schließstellung die Batterie (3) in dem Aufnahmefach (2) lösbar formschlüssig hält,
wobei das Aufnahmefach (2) im Inneren eine Stützplatte (7) zur Auflage der Batterie (3) aufweist, wobei die Stützplatte (7) über mindestens ein Rückstellmittel (8) mit einer Rückstellkraft beaufschlagt ist, wobei die Rückstellkraft entgegen der Einführrichtung (X-Y) gerichtet ist, und
wobei das Rückstellmittel (8) an einer der Öffnung (4) der ersten Hartschale (1a) gegenüberliegenden Stirnseite (10) des Aufnahmefachs (2) angeordnet ist und einen Anschlag für die Stützplatte (7) in dem Aufnahmefach (2) bildet.

2. Hartschalenkoffer (1) nach Anspruch 1,
wobei die Stützplatte (7) zwei Führungsmittel (9) zur Führung der Stützplatte (7) längs der Einführrichtung (X-Y) in dem Aufnahmefach (2) und gegen ein Verkanten der Stützplatte (7) in dem Aufnahmefach (2) aufweist.

3. Hartschalenkoffer (1) nach einem der Ansprüche 1 bis 2,
wobei das Aufnahmefach (2) an der Öffnung (4) der ersten Hartschale (1a) einen die Öffnung (4) umfangsgemäß umschließenden Flansch (12) zur Montage des Aufnahmefachs (2) an der ersten Hartschale (1a) aufweist.

4. Hartschalenkoffer (1) nach Anspruch 3,
wobei das Haltemittel (5) auf dem Flansch (12) von der Schließstellung bis zu einer Öffnungsstellung und umgekehrt verschiebbar aufliegt, wobei das Haltemittel (5) in der Schließstellung mit dem Flansch (12) formschlüssig verbunden ist.

5. Hartschalenkoffer (1) nach einem der Ansprüche 1 bis 4,
wobei das Haltemittel (5) eine spitzwinklig zur Einführrichtung (X-Y) verlaufende Einführschräge (5a) aufweist.

6. Hartschalenkoffer (1) nach Anspruch 5,
wobei ein Neigungswinkel der Einführschräge (5a) des Haltemittels (5) proportional zur Haltekraft ist.

7. Hartschalenkoffer (1) nach einem der Ansprüche 1 bis 6,
wobei das Rückstellmittel (8) oder ein das Haltemittel (5) mit der Haltekraft beaufschlagendes Mittel eine Spiralfeder sind.

8. Hartschalenkoffer (1) nach einem der Ansprüche 1 bis 7,
wobei die erste Hartschale (1a) einen aus der ersten Hartschale (1a) herausziehbaren U-förmigen Haltebügel (11) zum Hinterherziehen des Hartschalenkoffers (1) aufweist,
wobei der Haltebügel (11) zwei stangenförmige Schenkel (11a, 11b) aufweist, die in zwei parallel zueinander verlaufende Aufnahmeröhren der ersten Hartschale (1a) vollständig aufnehmbar sind, und
wobei das Aufnahmefach (2) zwischen den beiden Aufnahmeröhren angeordnet ist.

9. Hartschalenkoffer (1) nach Anspruch 8,
wobei die Öffnung (4) der ersten Hartschale (1a) zwischen Einführöffnungen der Aufnahmeröhren angeordnet ist, und
wobei die Einführrichtung (X-Y) der Batterie (3) einer Einschieberichtung der Schenkel (11a, 11b) des U-förmigen Haltebügels (11) in die Aufnahmeröhren entspricht.

10. Hartschalenkoffer (1) nach einem der Ansprüche 1 bis 9,
wobei das Aufnahmefach (2) an der Öffnung (4) der ersten Hartschale (1a) eine verschwenkbare Klappe (14) zum Verschluss des Aufnahmefachs (2) aufweist, und
wobei die Klappe (14) in einem verschlossenen Zustand des Aufnahmefachs (2) lösbar mit der ersten Hartschale (1a) verrastet ist.

11. Hartschalenkoffer (1) nach Anspruch 10,
wobei die Klappe (14) in dem verschlossenen Zustand des Aufnahmefachs (2) über ein Schlüsselschloss verschließbar ist, insbesondere über ein Transportation Security Administration-Schloss (TSA-Schloss).

12. Hartschalenkoffer nach einem der Ansprüche 10 oder 11 ,
wobei die Klappe (14) eine Durchführöffnung zum Durchführen eines Steckers eines Ladekabels aufweist.

13. Hartschalenkoffer nach Anspruch 12,
wobei die Klappe (14) eine Verschlussklappe zum Verschließen der Durchführöffnung aufweist.

14. Montageeinheit (15) zur Montage an einer Ausnehmung (2) einer ersten Hartschale (1a) eines Hartschalenkoffers (1), aufweisend ein Montagegerüst, welches mit zwei parallel zueinander verlaufenden Aufnahmeröhren verbunden ist,
wobei in den Aufnahmeröhren stangenförmige Schenkel (11a, 11b) eines U-förmigen Haltebügels (11) verschiebbar geführt sind,
wobei das Montagegerüst ein Aufnahmefach (2) aufweist, welches zwischen den Aufnahmeröhren angeordnet ist,
wobei in dem Aufnahmefach (2) eine wiederaufladbare Batterie (3) zum Aufladen eines externen elektrischen Gerätes aufgenommen ist,
wobei das Montagegerüst eine außenliegende Öffnung (4) aufweist, über welche die Batterie (3) in einer Einführrichtung (X-Y) in das Aufnahmefach (2) einführbar ist,
wobei das Aufnahmefach (2) ein Haltemittel (5) aufweist, welches in einer Schließstellung die Batterie (3) in dem Aufnahmefach (2) lösbar formschlüssig hält,
wobei das Aufnahmefach (2) im Inneren eine Stützplatte (7) zur Auflage der Batterie (3) aufweist, wobei die Stützplatte (7) über mindestens ein Rückstellmittel (8) mit einer Rückstellkraft beaufschlagt ist, wobei die Rückstellkraft entgegen der Einführrichtung (X-Y) gerichtet ist, und
wobei das Rückstellmittel (8) an einer der Öffnung (4) des Montagegerüsts gegenüberliegenden Stirnseite (10) des Aufnahmefachs (2) angeordnet ist und einen Anschlag für die Stützplatte (7) in dem Aufnahmefach (2) bildet.

## Claims

1. Hard shell case (1), comprising two hard shells (1a, 1b),
wherein a first hard shell (1a) comprises a receiving compartment (2) in which a rechargeable battery (3) for charging an external electrical device is received,
wherein the first hard shell (1a) comprises an external opening (4) via which the battery (3) can be inserted into the receiving compartment (2) in an insertion direction (X-Y),
wherein the receiving compartment (2) comprises a fastening means (5) which, in a closed position, holds the battery (3) in the receiving compartment (2) in a releasable form-fitting manner, and
wherein the receiving compartment (2) comprises in the interior a support plate (7) for supporting the battery (3), wherein the support plate (7) is subjected to a restoring force via at least one restoring means (8), wherein the restoring force is directed counter to the insertion direction (X-Y), and
wherein the restoring means (8) is arranged on an end face (10) of the receiving compartment (2) opposite the opening (4) of the first hard shell (1a) and forms a stop for the support plate (7) in the receiving compartment (2).

2. Hard shell case (1) according to claim 1,
wherein the support plate (7) comprises two guiding means (9) for guiding the support plate (7) along the insertion direction (X-Y) in the receiving compartment (2) and against tilting of the support plate (7) in the receiving compartment (2).

3. Hard shell case (1) according to one of claims 1 to 2,
wherein the receiving compartment (2) comprises at the opening (4) of the first hard shell (1a) a flange (12) circumferentially surrounding the opening (4) for mounting the receiving compartment (2) on the first hard shell (1a).

4. Hard shell case (1) according to claim 3,
wherein the fastening means (5) rests on the flange (12) so as to be displaceable from the closed position to an open position and vice versa, wherein the fastening means (5) is connected to the flange (12) in a form-fitting manner in the closed position.

5. Hard shell case (1) according to one of claims 1 to 4,
wherein the fastening means (5) comprises a lead-in-chamfer (5a) extending at an acute angle to the insertion direction (X-Y).

6. Hard shell case (1) according to claim 5,
wherein an angle of inclination of the lead-in-chamfer (5a) of the fastening means (5) is proportional to the holding force.

7. Hard shell case (1) according to one of claims 1 to 6,
wherein the restoring means (8) or a means subjecting the holding means (5) to the holding force is a spiral spring.

8. Hard shell case (1) according to one of claims 1 to 7,
wherein the first hard shell (1a) comprises a U-shaped holding bracket (11) which can be pulled out of the first hard shell (1a) for pulling the hard shell case (1) from behind,
wherein the holding bracket (11) comprises two rod-shaped legs (11a, 11b) which can be completely received in two receiving tubes of the first hard shell (1a) extending parallel to one another, and
wherein the receiving compartment (2) is arranged between the two receiving tubes.

9. Hard shell case (1) according to claim 8,
wherein the opening (4) of the first hard shell (1a) is arranged between insertion openings of the receiving tubes, and
wherein the insertion direction (X-Y) of the battery (3) corresponds to a direction of insertion of the legs (11a, 11b) of the U-shaped holding bracket (11) into the receiving tubes.

10. Hard shell case (1) according to one of claims 1 to 9,
wherein the receiving compartment (2) comprises at the opening (4) of the first hard shell (1a) a pivotable flap (14) for closing the receiving compartment (2), and
wherein the flap (14) is releasably latched to the first hard shell (1a) in a closed state of the receiving compartment (2).

11. Hard shell case (1) according to claim 10,
wherein the flap (14) can be closed in the closed state of the receiving compartment (2) via a key lock, in particular via a Transportation Security Administration (TSA) lock.

12. Hard shell case according to one of claims 10 or 11,
wherein the flap (14) comprises a lead-through opening for leading through a plug of a charging cable.

13. Hard shell case according to claim 12,
wherein the flap (14) comprises a closing flap for closing the lead-through opening.

14. Mounting unit (15) for mounting on a recess (2) of a first hard shell (1a) of a hard shell case (1), comprising a mounting framework which is connected to two receiving tubes extending parallel to one another,
wherein rod-shaped legs (11a, 11b) of a U-shaped holding bracket (11) are displaceable guided in the receiving tubes,
wherein the mounting framework comprises a receiving compartment (2) which is arranged between the receiving tubes,
wherein a rechargeable battery (3) for charging an external electrical device is received in the receiving compartment (2),
wherein the mounting framework comprises an external opening (4) via which the battery (3) can be inserted into the receiving compartment (2) in an insertion direction (X-Y),
wherein the receiving compartment (2) comprises a fastening means (5) which, in a closed position, holds the battery (3) in the receiving compartment (2) in a releasable form-fitting manner, and
wherein the receiving compartment (2) comprises in the interior a support plate (7) for supporting the battery (3), wherein the support plate (7) is subjected to a restoring force via at least one restoring means (8), wherein the restoring force is directed counter to the insertion direction (X-Y), and
wherein the restoring means (8) is arranged on an end face (10) of the receiving compartment (2) opposite the opening (4) of the mounting framework and forms a stop for the support plate (7) in the receiving compartment (2).

## Revendications

1. Valise à coques rigides (1), comprenant deux coques rigides (1a, 1b),
dans laquelle une première coque rigide (1a) comprend un compartiment récepteur (2) dans lequel est reçue une batterie rechargeable (3) pour la charge d'un appareil électrique externe,
dans laquelle la première coque rigide (1a) comporte une ouverture extérieure (4) à travers laquelle la batterie (3) peut être introduite dans le compartiment récepteur (2) dans une direction d'introduction (X-Y),
dans laquelle le compartiment récepteur (2) comporte un moyen de retenue (5) qui, dans une position fermée, maintient par complémentarité de formes la batterie (3) dans le compartiment récepteur (2) de façon amovible,
dans laquelle le compartiment récepteur (2) comporte à l'intérieur une plaque d'appui (7) pour poser la batterie (3), la plaque d'appui (7) étant soumise à une force de rappel par l'intermédiaire d'au moins un moyen de rappel (8), la force de rappel étant orientée à l'opposé de la direction d'introduction (X-Y), et
dans laquelle le moyen de rappel (8) est disposé sur un côté frontal (10) du compartiment récepteur (2) situé à l'opposé de l'ouverture (4) de la première coque rigide (1a) et formant une butée pour la plaque d'appui (7) dans le compartiment récepteur (2).

2. Valise à coques rigides (1) selon la revendication 1, dans laquelle la plaque d'appui (7) comporte deux moyens de guidage (9) pour le guidage de la plaque d'appui (7) suivant la direction d'introduction (X-Y) dans le compartiment récepteur (2) et contre un coincement de la plaque d'appui (7) dans le compartiment récepteur (2).

3. Valise à coques rigides (1) selon une des revendications 1 à 2,
dans laquelle le compartiment récepteur (2) comprend au niveau de l'ouverture (4) de la première coque rigide (1a) un collet (12) entourant périphériquement l'ouverture (4) pour monter le compartiment récepteur (2) sur la première coque rigide (1a).

4. Valise à coques rigides (1) selon la revendication 3, dans laquelle le moyen de retenue (5) repose sur le collet (12) de manière coulissante depuis la position fermée jusqu'à une position ouverte et inversement, le moyen de retenue (5) étant relié par complémentarité de formes avec le collet (12) dans la position fermée.

5. Valise à coques rigides (1) selon une des revendications 1 à 4,
dans laquelle le moyen de retenue (5) comporte un biseau d'introduction (5a) s'étendant à angle aigu par rapport à la direction d'introduction (X-Y).

6. Valise à coques rigides (1) selon la revendication 5, dans laquelle un angle d'inclinaison du biseau d'introduction (5a) du moyen de retenue (5) est proportionnel à la force de retenue.

7. Valise à coques rigides (1) selon une des revendications 1 à 6,
dans laquelle le moyen de rappel (8), ou un moyen soumettant le moyen de retenue (5) à la force de retenue, est un ressort spiral.

8. Valise à coques rigides (1) selon une des revendications 1 à 7,
dans laquelle la première coque rigide (1a) comporte un étrier de retenue en forme de U (11) pouvant être extrait de la première coque rigide (1a) afin de tirer la valise à coques rigides (1) derrière soi,
dans laquelle l'étrier de retenue (11) comporte deux branches en forme de tiges (11a, 11b) qui peuvent être entièrement reçues dans deux tubes récepteurs parallèles l'un à l'autre de la première coque rigide (1a), et
dans laquelle le compartiment récepteur (2) est disposé entre les deux tubes récepteurs.

9. Valise à coques rigides (1) selon la revendication 8, dans laquelle l'ouverture (4) de la première coque rigide (1a) est disposée entre des ouvertures d'introduction des tubes récepteurs, et
dans laquelle la direction d'introduction (X-Y) de la batterie (3) correspond à une direction d'insertion des branches (11a, 11b) de l'étrier de retenue en forme de U (11) dans les tubes récepteurs.

10. Valise à coques rigides (1) selon une des revendications 1 à 9,
dans laquelle le compartiment récepteur (2) comporte au niveau de l'ouverture (4) de la première coque rigide (1a) un volet pivotant (14) pour fermer le compartiment récepteur (2), et
dans laquelle, dans un état fermé du compartiment récepteur (2), le volet (14) est cranté de façon détachable avec la première coque rigide (1a).

11. Valise à coques rigides (1) selon la revendication 10, dans laquelle le volet (14) est verrouillable dans l'état fermé du compartiment récepteur (2) par l'intermédiaire d'une serrure à clé, en particulier par l'intermédiaire d'une serrure à clé *Transportation Security Administration* (serrure à clé TSA).

12. Valise à coques rigides selon une des revendications 10 ou 11,
dans laquelle le volet (14) comporte une ouverture de passage pour le passage d'une fiche d'un câble de charge.

13. Valise à coques rigides selon la revendication 12, dans laquelle le volet (14) comporte un volet de fermeture pour fermer l'ouverture de passage.

14. Unité de montage (15) à monter dans un évidement (2) d'une première coque rigide (1a) d'une valise à coques rigides (1), comprenant un cadre de montage qui est relié à deux tubes récepteurs s'étendant parallèlement l'un à l'autre,
dans laquelle des branches en forme de tiges (11a, 11b) d'un étrier de retenue en forme de U (11) sont guidées de manière coulissante dans les tubes récepteurs,
dans laquelle le cadre de montage comporte un compartiment récepteur (2) qui est disposé entre les tubes récepteurs, dans laquelle une batterie rechargeable (3) pour la charge d'un appareil électrique externe est reçue dans le compartiment récepteur (2),
dans laquelle le cadre de montage comporte une ouverture extérieure (4) à travers laquelle la batterie (3) peut être introduite dans le compartiment récepteur (2) dans une direction d'introduction (X-Y),
dans laquelle le compartiment récepteur (2) comporte un moyen de retenue (5) qui, dans une position fermée, maintient par complémentarité de formes la batterie (3) dans le compartiment récepteur (2) de façon amovible,
dans laquelle le compartiment récepteur (2) comporte à l'intérieur une plaque d'appui (7) pour poser la batterie (3), la plaque d'appui (7) étant soumise à une force de rappel par l'intermédiaire d'au moins un moyen de rappel (8), la force de rappel étant orientée à l'opposé de la direction d'introduction (X-Y), et
dans laquelle le moyen de rappel (8) est disposé sur un côté frontal (10) du compartiment récepteur (2) situé à l'opposé de l'ouverture (4) du cadre de montage et forme une butée pour la plaque d'appui (7) dans le compartiment récepteur (2).
